# EUROPÄISCHE PATENTSCHRIFT

(11) **EP 0 740 088 B1**
(45) Veröffentlichungstag und Bekanntmachung des Hinweises auf die Patenterteilung: **30.12.1998**
(21) Anmeldenummer: 95810350.9
(22) Anmeldetag: 24.05.1995
(51) Int. Cl.: F16G 11/00, A01G 17/06

(54) **Wandhalter**
Wall support
Support mural

(30) Priorität: 25.04.1995 CH 1183/95
(43) Veröffentlichungstag der Anmeldung: 30.10.1996
(73) Patentinhaber: Jakob AG, CH-3555 Trubschachen (CH)
(72) Erfinder: Lehmann, Rudolf, CH-4500 Solothurn (CH)
(74) Vertreter: Hug Interlizenz AG

(56) Entgegenhaltungen:
- DE-C- 596 624
- DE-U- 9 104 850
- DE-U- 9 403 643

## Beschreibung

### TECHNISCHES GEBIET

Die vorliegende Erfindung bezieht sich auf das Gebiet der Anwendung von Seilen in der Bautechnik. Sie betrifft einen Wandhalter zur endseitigen Befestigung eines im wesentlichen parallel zu einer Wand in einem Abstand verlaufenden Seiles, insbesondere Drahtseiles, welcher Wandhalter einen mit einem Ende in der Wand verankerbaren und im verankerten Zustand aus der Wand senkrecht herausragenden Haltebolzen sowie Abstützmittel umfassen, welche den Haltebolzen seitlich gegen die Wand abstützen.

Ein solcher Wandhalter, welcher für die Endbefestigung von Rankhilfeseilen an Bauwerkswänden vorgesehen ist, ist aus dem Stand der Technik bekannt

### STAND DER TECHNIK

Bei der Befestigung von parallel und in einem Abstand von einigen cm zur Wand verlaufenden und unter Spannung stehenden Seilen an einem Haltebolzen, welcher in der Wand verankert ist und senkrecht zur Wandoberfläche aus der Wand heraussteht, treten unter bestimmten Bedingungen (Schneelast, Windlast, starker Pflanzenbewuchs etc.) starke Zugkräfte quer zur Achsrichtung des Haltebolzens auf. Diese Kräfte können im einfachsten Fall den Haltebolzen in Zugrichtung verbiegen, wodurch das daran befestigte Seil seine Spannung verliert und durchhängt oder schwingt. In anderen Fällen kann die Verankerung des Haltebolzens in der Wand geschwächt oder sogar vollständig herausgerissen werden. Hierdurch kann eine Gefährdung von Personen oder Gütern entstehen, wenn aus der Verankerung gerissene Teile aus grösserer Höhe herabfallen.

Es sind daher in der Praxis bereits Wandhalter verwirklicht worden, bei welchen der Haltebolzen in Zugrichtung des befestigten Seiles gegen die Wand zusätzlich abgestützt wird. Hierzu wird ein Streifen aus Metallblech verwendet, der an seinem einen Ende in einem Abstand von der Wand mit dem Haltebolzen verschraubt ist, und in einem Fall schräg zur Wand hin verläuft und dort an seinem anderen Ende in einem Abstand vom Haltebolzen in der Wand verankert ist (sog. Winkelabstandhalter). In einem anderen Fall ist der Blechstreifen so gebogen, dass er zwei Schenkel eines Dreiecks bildet, welches durch den Haltebolzen als dritten Schenkel vervollständigt wird (sog. Triangel-Abstandhalter).

Nachteilig ist bei den bekannten Wandhaltern, dass sie ihre maximale Abstützung, d.h. ihre maximale Belastbarkeit durch quer angreifende Zugkräfte, nur in einer einzigen Richtung erreichen. es können daher an einer Wandhalterung nicht mehrere Seile mit unterschiedlichen Zugrichtungen befestigt werden. Selbst wenn nur ein Seil an der Wandhalterung befestigt wird, muss diese sorgfältig auf die Zugrichtung ausgerichtet und montiert werden, um die grösstmögliche Sicherheit zu erreichen. Weiterhin kann auch bei optimaler Montage des Wandhalters eine Schwächung der Verankerung auftreten, wenn sich durch eine Belastung des Seiles quer zur Seilrichtung das Seil durchbiegt und sich damit die Richtung der Krafteinleitung ändert.

### DARSTELLUNG DER ERFINDUNG

Es ist daher Aufgabe der Erfindung, eine Wandhalterung zu schaffen, die einfach aufgebaut ist, kostengünstig und materialsparend hergestellt werden kann, hohen ästhetischen Ansprüchen genügt, leicht montiert werden kann, flexibel in der Anwendung ist, und eine gleich gute Abstützung für verschiedene Richtungen der Zugspannung ermöglicht.

Die Aufgabe wird bei einer Wandhalterung der eingangs genannten Art dadurch gelöst, dass die Abstützmittel eine an der Wand anliegende, mit dem Haltebolzen verbundene und sich vom Haltebolzen aus seitlich in verschiedene Richtungen erstreckende Grundplatte und eine Mehrzahl von länglichen, zwei gegenüberliegende Enden aufweisenden Abstützelementen umfassen, dass die Abstützelemente jeweils mit dem Haltebolzen einen spitzen Winkel einschliessen, dass die Abstützelemente jeweils mit dem wandseitigen Ende an der Grundplatte befestigt sind und mit dem anderen Ende den Haltebolzen an einem von der Wand beabstandeten Punkt abstützen, und dass die Abstützelemente über den Umfang des Haltebolzens verteilt angeordnet sind.

Die Verwendung einzelner verteilt angeordneter Abstützelemente ermöglicht bei geringem Materialaufwand und schlankem Aussehen eine Aufnahme von Zugkräften aus verschiedenen Richtungen. Die Befestigung der Abstützelemente auf einer gemeinsamen Grundplatte vereinfacht den Aufbau, ergibt eine grossflächige Abstützung und verleiht der Anordnung eine hohe mechanische Stabilität. So können beispielsweise durch Verwendung von zwei Abstützelementen, deren Projektion auf die Grundplatte einen Winkel von 90° einschliesst, Zugkräfte aufgefangen werden, deren Richtung einen Bereich von etwa 90° überstreichen kann.

Eine erste bevorzugte Ausführungsform der erfindungsgemässen Wandhalterung zeichnet sich dadurch aus, dass die Grundplatte eine kreisförmige, ebene Platte ist und den Haltebolzen konzentrisch umgibt, dass mehr als zwei Abstützelemente vorgesehen sind, und dass die Abstützelemente über den Umfang des Haltebolzens gleichmässig verteilt angeordnet sind. Hierdurch kann mit sehr einfachen Mitteln eine Abstützung des Haltebolzens für alle Richtungen erreicht werden. Wenn gemäss einer Weiterbildung dieser Ausführungsform drei Abstützelemente vorgesehen sind, deren Projektion auf die Grundplatte jeweils einen Winkel von etwa 120° miteinander einschliesst, wird die 360°-Abstützung mit der minimalen Anzahl von Abstützelementen verwirklicht.

Eine zweite bevorzugte Ausführungsform des Wandhalters nach der Erfindung ist dadurch gekennzeichnet, dass der Haltebolzen als durchgehende Gewindestange ausgebildet ist, und dass die Grundplatte eine zentrale Gewindebohrung (201) aufweist, in welche der Haltebolzen einschraubbar ist. Der Haltebolzen kann auf diese Weise einfach durch Einschrauben mit dem einen Ende in einen Wanddübel in der Wand verankert werden. Am anderen Ende kann das Seil an der Gewindestange auf die unterschiedlichste Weise befestigt werden, so dass sich eine hohe Flexibilität in der Anwendung ergibt. Schliesslich kann die Gewindestange leicht in unterschiedlichen Längen bereitgestellt werden, so dass der Abstand des Seiles zur Wand einfach und schnell eingestellt und verändert werden kann.

Eine weitere bevorzugte Ausführungsform des erfindungsgemässen Wandhalters zeichnet sich entweder dadurch aus, dass zum Abstützen des Haltebolzens durch die Abstützelemente eine Stützplatte vorgesehen ist, dass die Stützplatte parallel zur Grundplatte angeordnet ist, dass die Stützplatte eine zentrale Durchgangsbohrung aufweist, durch welche der Haltebolzen hindurchsteckbar ist, und dass die Abstützelemente mit ihren anderen Ende an der Stützplatte befestigt sind, oder dass zum Abstützen des Haltebolzens ein Stützrohr vorgesehen ist, welches den Haltebolzen konzentrisch umgibt, und dass die Abstützelemente mit ihrem anderen Ende an dem Stützrohr befestigt sind. In beiden Fällen kann, wenn als Haltebolzen eine Gewindestange verwendet wird, der Haltebolzen an der Stützplatte bzw. dem Stützrohr auf einfache Weise gekontert werden. Die Befestigung des Seiles am Haltebolzen kann dann unabhängig vom Angriffspunkt der Abstützelemente weiter nach draussen verlegt werden, so dass der Wandabstand mit einem vorgegebenen Wandhalter sehr variabel gestaltet werden kann.

Bei einer weiteren bevorzugten Ausführungsform ist die Befestigung der Abstützelemente an der Grundplatte und/oder an der Stützplatte bzw. an dem Stützrohr lösbar ausgebildet. Dies hat nicht nur den Vorteil, dass die Wandhalter vor einfach nach einem Baukastensystem zusammengesetzt werden können, sondern auch, dass mit derselben Grundplatte und derselben Stützplatte bzw. demselben Stützrohr Abstützelemente unterschiedlicher Länge kombiniert werden können. Noch weiter vereinfacht wird die Montage, wenn die Abstützelemente gemäss einer Weiterbildung in ihrer Länge verstellbar ausgebildet sind.

Die lösbare Befestigung kann auf verschiedene Weise verwirklicht werden. In der Praxis besonders bewährt hat es sich, wenn gemäss einer weiteren Ausführungsform der Erfindung die lösbare Befestigung entweder jeweils ein aus einer Oesenlasche und einem zugehörigen Gabelkopf gebildetes Paar umfasst, welches untereinander durch einen Verbindungsbolzen verbunden ist, oder wenn die lösbare Befestigung jeweils ein aus einer Kugel und einer zugehörigen Kugellagerung gebildetes Paar umfasst. Hierdurch wird eine drehbare Anlenkung der Abstützungselemente an den Befestigungspunkten erreicht, welche die Montage erleichtert und zur Flexibilität des Systems beiträgt.

Weitere Ausführungsformen ergeben sich aus den abhängigen Ansprüchen.

Eine erste Anwendung des Wandhalters nach der Erfindung ist dadurch gekennzeichnet, dass der Haltebolzen über ein thermisch isolierendes Zwischenstück in der Wand verankert wird. Auf diese Weise lassen sich unerwünschte Kältebrücken in der Wand durch den Haltebolzen sicher vermeiden.

Eine zweite Anwendung des Wandhalters nach der Erfindung erfolgt bei einer Begrünungshilfe für die Begrünung von Bauwerkswänden bzw. Fassaden. Durch die erfindungsgemässe Abstützung können hier auch unter schwierigen Bedingungen grosse Lasten (Schnee, Wind etc.) sicher gehalten werden. Zugleich stört der vergleichsweise zierliche Aufbau des Wandhalters den optischen Eindruck der Fassade verhältnismässig wenig.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: ein erstes Ausführungsbeispiel eines erfindungsgemässen Wandhalters mit drei gleichmässig verteilten Abstützelementen in der perspektivischen Seitenansicht (Fig. 1A) und in der Draufsicht von oben (Fig. 1B);
- Fig. 2: in einer Seitenansicht (in der Ebene X-X gemäss Fig. 1B) und teilweise geschnitten ein zweites Ausführungsbeispiel eines erfindungsgemässen Wandhalters mit fest verschweissten Abstützstangen und einer Wandverankerung über ein thermisch isolierendes Zwischenstück;
- Fig. 3: in einer Seitenansicht (Fig. 3A; in der Ebene X-X gemäss Fig. 1B) und in einer Detailansicht (Fig. 3B) ein drittes, bevorzugtes Ausführungsbeispiel eines erfindungsgemässen Wandhalters mit drei Abstützrohren, welche über Gabelköpfe und Oesenlaschen an ihren Enden jeweils lösbar und schwenkbar befestigt sind; und
- Fig. 4: in einer Seitenansicht (Fig. 4A; in der Ebene Y-Y gemäss Fig. 4B) und in der Draufsicht von oben ein viertes, bevorzugtes Ausführungsbeispiel eines Wandhalters nach der Erfindung mit drei Abstützstangen, welche an ihren Enden jeweils über ein Kugelgelenk lösbar und schwenkbar befestigt sind.

### WEGE ZUR AUSFÜHRUNG DER ERFINDUNG

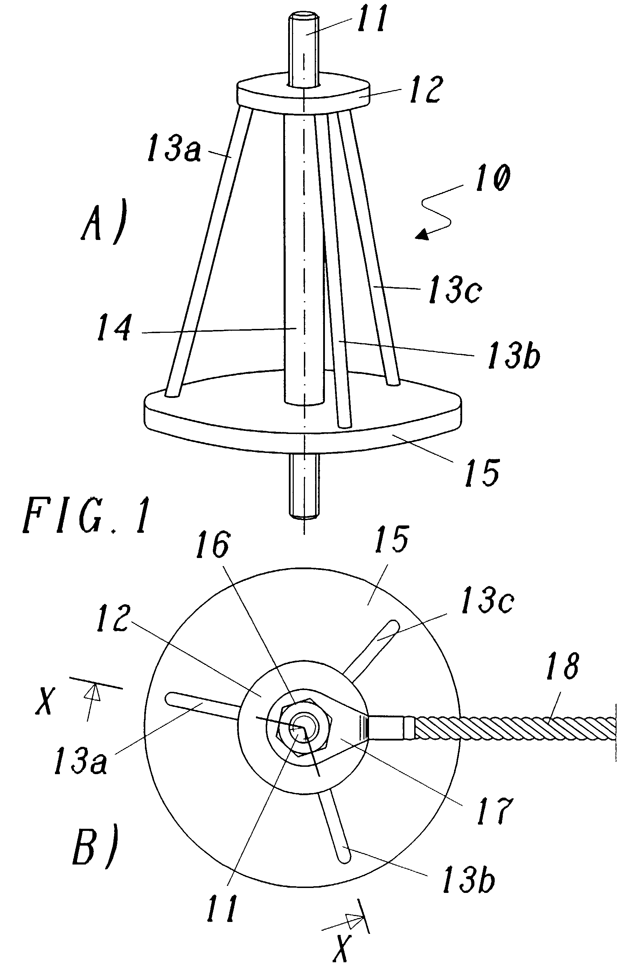

In Fig. 1 ist ein verallgemeinertes Ausführungsbeispiel eines Wandhalters nach der Erfindung wiedergegeben. Fig. 1A zeigt den Wandhalter in einer perspektivischen Seitenansicht, Fig. 1B ist eine Draufsicht von oben auf den Wandhalter, an welchem ein Drahtseil mit einem Augterminal angeschraubt ist. Der Wandhalter 10 umfasst eine kreisförmige Grundplatte 15, welche mit ihrer Unterseite im eingebauten Zustand an der Wand anliegt. Er umfasst weiterhin drei schlanke stangen- oder rohrförmige Abstützelemente 13a-c, die jeweils um 120° versetzt um einen zentralen Haltebolzen 11 herum angeordnet sind, welcher senkrecht zur Grundplatte steht und sich durch die Grundplatte 15 zentral hindurch erstreckt. Die Abstützelemente 13a-c sind mit ihrem unteren Ende jeweils auf der Oberseite der Grundplatte 15 befestigt. Mit ihrem oberen Ende sind sie jeweils auf der Unterseite einer - ebenfalls kreisrunden - Stützplatte 12 befestigt, die parallel und konzentrisch zur Grundplatte 15 und in einem Abstand davon angeordnet ist. Die Abstützelemente 13a-c schliessen dabei mit dem Haltebolzen 11 jeweils einen spitzen Winkel ein. Der Haltebolzen 11, der vorzugsweise als durchgehende Gewindestange ausgebildet und zum Schutz und zur optischen Abdeckung von einem konzentrischen Abdeckrohr 14 umgeben ist, erstreckt sich auch zentral durch die Stützplatte 12 hindurch, so dass er unterhalb der Grundplatte 15 und oberhalb der Stützplatte 12 jeweils mit einem Gewindeabschnitt über die jeweilige Platte 15 bzw. 12 hinausragt. Mit dem unteren herausstehenden Gewindeabschnitt kann der Haltebolzen 11 beispielsweise in einen in der Wand eingelassenen Schwerlastdübel oder dgl. eingeschraubt werden. An dem oberen herausstehenden Gewindeabschnitt lässt sich - wie dies in Fig. 1B für ein Drahtseil 18 mit einem Augterminal 17 und einer Mutter 17 angedeutet ist - das zu haltende Seil befestigen (anschrauben).

Die Zugkraft des gespannten Drahtseiles 18 greift quer zum Haltebolzen 11 am Haltebolzen oberhalb der Stützplatte 12 an. Diese Zugkraft wird zumindest teilweise auf die Stützplatte 12 übertragen und von dort über die Abstützelemente 13a-c in die Grundplatte 15 eingeleitet und auf die darunterliegende Wand übertragen. Die auf der dem Drahtseil 18 zugewandten Seite liegenden Abstützelemente (13b und 13c im Beispiel der Fig. 1B) werden dabei auf Druck beansprucht, die anderen Abstützelemente (13a in Fig. 1B) entsprechend auf Zug. Durch die 120°-Anordnung der Abstützelemente 13a-c wird eine Abstützung erreicht, die den vollen Winkelbereich von 360° überstreicht. Dazu sind mindestens drei Abstützelemente notwendig; es können jedoch auch vier, fünf oder noch mehr Abstützelemente verwendet werden, die um den Umfang des Haltebolzens herum gleichmässig verteilt angeordnet sind. Es ist aber auch denkbar, anstelle der drei nur zwei Abstützelemente zu verwenden, deren Projektionen auf die Grundplatte 15 z.B. einen Winkel von 90° einschliessen. Es ergibt sich dann entsprechend ein reduzierter Abstützbereich von 90°.

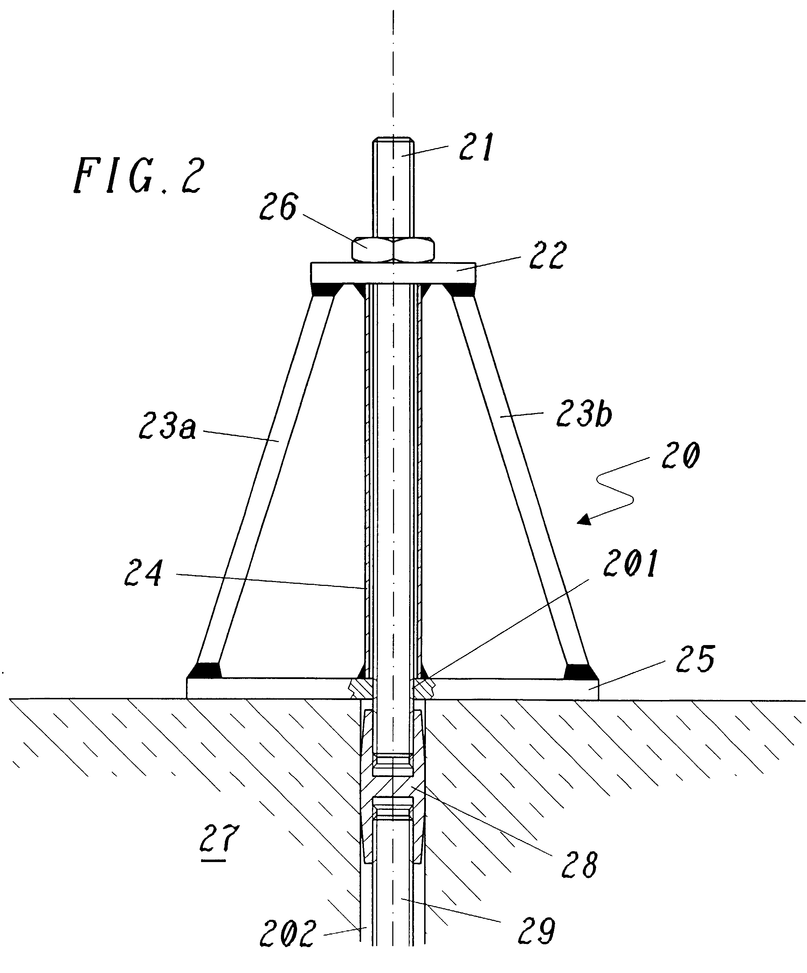

Die Ausführung der Abstützelemente und deren Befestigung an der Grundplatte und der Stützplatte kann sehr unterschiedlich sein und richtet sich nach den Anforderungen an die Flexibilität, den einfachen Aufbau und die Funktionalität des Wandhalters. Verschiedene Ausführungsbeispiele sind in den Figuren 2, 3 und 4 wiedergegeben. Fig. 2 zeigt in der Seitenansicht (in der Ebene X-X gemäss Fig. 1B) und teilweise geschnitten einen sehr einfach aufgebauten, in der Anwendung dafür weniger flexiblen Wandhalter 20 mit einem Haltebolzen 21, einer Stützplatte 22 und einer Grundplatte 25. Die (drei) Abstützelemente sind hier als Abstützstangen 23a,b aus Vollmaterial ausgebildet. Die Abstützstangen 23a,b sind endseitig mit der Stützplatte 22 bzw. der Grundplatte 25 verschweisst. Der Haltebolzen 21, der auch in diesem Fall eine Gewindestange ist, ist zwischen den Platten 22 und 25 von einem Abdeckrohr 24 umgeben, welches endseitig ebenfalls mit den Platten 22 bzw. 25 verschweisst ist. Im Zentrum der Grundplatte 25 ist vorzugsweise eine Gewindebohrung 201 vorgesehen, die dem Gewinde des Haltebolzens 21 angepasst ist, und in welche der Haltebolzen 21 eingeschraubt wird. Zur Konterung des Haltebolzens 21 kann auf der Oberseite der Stützplatte 22 eine Mutter 26 eingesetzt werden. Der Wandhalter 20 ist in einer Wand 27 verankert.

Ein Wandhalter nach der Erfindung, der vorzugsweise vollständig aus Metall besteht, muss relativ tief in der Wand verankert werden. Die Gewindestange des Haltebolzens 21 aus Fig. 2 würde, wenn sie tief in die Wand 27 hineinreicht oder sogar durch die Wand 27 hindurchgeht, eine unerwünschte Kältebrücke darstellen, welche lokal die thermische Isolation der Wand aufhebt. Da beim Einsatz als Begrünungshilfe viele Wandhalter in der Wand verankert werden müssen, würden viele Kältebrücken vorhanden sein, die einen merklichen Einfluss auf die Gebäudeisolation hätten. Um solche Kältebrücken nicht entstehen zu lassen, wird daher vorzugsweise der über die Grundplatte 25 hinausragende, in die Bohrung 202 in der Wand hineinreichende Gewindeabschnitt des Haltebolzens 21 nur relativ kurz gewählt. Verlängert wird der Haltebolzen 21 in der Wand 27 durch eine weitere Gewindestange 29, die an den Haltebolzen 21 über ein thermisch isolierendes Zwischenstück 28 (z.B. aus einem Kunststoff) anschliesst. Das Zwischenstück 28 kann dazu auf beiden Seiten mit einem Gewinde versehen sein, in welches der Haltebolzen 21 bzw. die Gewindestange 29 eingeschraubt ist.

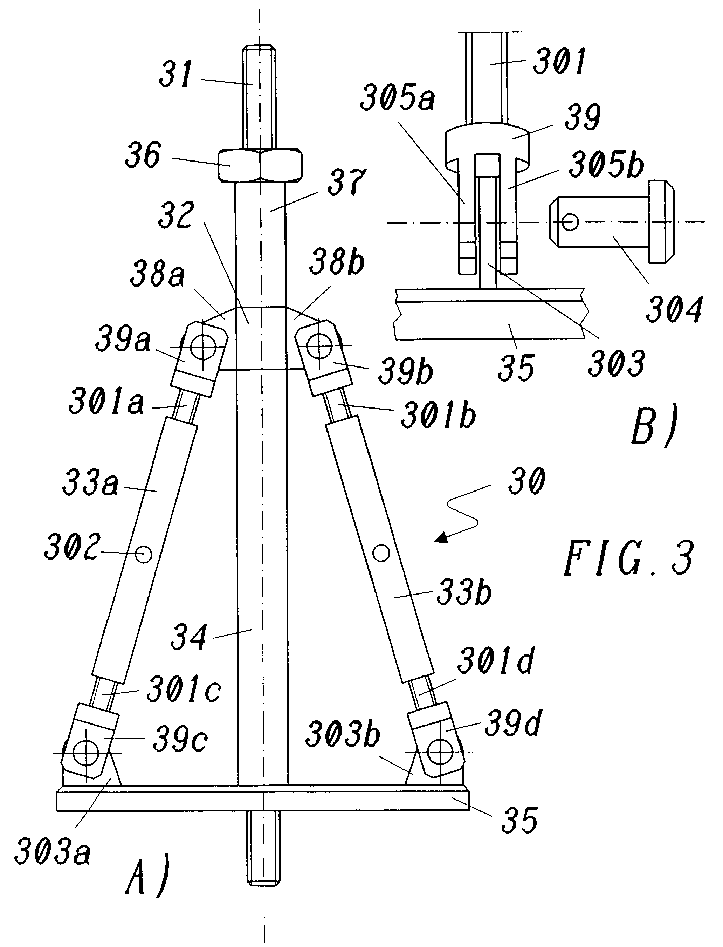

Ein weiteres, bevorzugtes Ausführungsbeispiel eines Wandhalters nach der Erfindung ist in Fig. 3 dargestellt, wobei Fig. 3A eine Seitenansicht (in der Ebene X-X gemäss Fig. 1B) und Fig. 3B eine Detailansicht der Abstützelement-Befestigung zeigen. Der Wandhalter 30, der als Abstützelemente (drei) Abstützrohre 33a,b aufweist, ist mit lösbaren Befestigungen der Abstützelemente ausgestattet. Auf diese Weise kann der Wandhalter 30 nach dem Baukastensystem zusammengestellt und am Einsatzort montiert werden, wodurch sich Lagerhaltung und Transport wesentlich vereinfachen. Der Haltebolzen 31 ist wiederum eine Gewindestange, die mit dem unteren Ende durch die Grundplatte 35 hindurchgeschraubt ist. Anstelle der Stützplatte ist hier ein Stützrohr 32 vorgesehen, welches den Haltebolzen 31 in Höhe der Abstützpunkte konzentrisch umgibt. Der Haltebolzen 31 ist zwischen dem Stützrohr 32 und der Grundplatte 35 mit einem konzentrischen Abdeckrohr 34 umgeben. Oberhalb des Stützrohres 32 kann, wenn der Haltebolzen 31 länger ausgebildet ist, ein gleichartiges Verlängerungsrohr 37 vorgesehen sein. Auf diese Weise kann der Abstand des Drahtseiles zur Wand über den Abstand des Stützrohres 32 hinaus vergrössert werden. Eine Mutter 36 dient auch hier zur Konterung.

Die Abstützrohre 33a,b sind lösbar und verschwenkbar an der Grundplatte 35 bzw. am Stützring 32 befestigt. Diese Art der Befestigung wird erreicht durch eine paarweise Kombination aus je einer Oesenlasche 38a,b bzw. 303a,b und einem Gabelkopf 39a-d. Die oberen Oesenlaschen 38a,b sind um je 120° versetzt seitlich an der Wandung des Stützrohres 32 befestigt (z.B. angeschweisst). Die unteren Oesenlaschen 303a,b sind - ebenfalls um je 120° versetzt - auf der Oberseite der Grundplatte 35 befestigt (z.B. angeschweisst). Wie in der Detailansicht von Fig. 3B genauer zu sehen ist, weist jeder Gabelkopf 39 zwei parallele Schenkel 305a,b auf, welche die zugehörige Oesenlasche 303 in die Mitte nehmen. Der Gabelkopf 39 wird dann mittels eines seitlich durchsteckbaren Verbindungsbolzens 304 schwenkbar mit der Oesenlasche 303 verbunden. Der Verbindungsbolzen 304 kann durch einen Splint oder dgl. gesichert werden. Jeder Gabelkopf 39 bzw. 39a-d ist mit einem Gewindestück 301 bzw. 301a-d versehen, mit dem er in eine entsprechende Gewindebohrung im Abstützrohr 33a,b eingeschraubt werden kann. Pro Abstützrohr 33a,b ist eine Kombination aus einem Rechts- und einem Linksgewinde vorgesehen, so dass durch eine Verdrehen des Abstützrohres 33a,b die Abstützlänge verändert werden kann. Das Verdrehen der Abstützrohre 33a,b wird durch Löcher 302 erleichtert, in welche ein hebelartiges Werkzeug gesteckt werden kann. Der Wandhalter 30 kann aufgrund seiner Konstruktion leicht vor Ort aus seinen Einzelteilen zusammengebaut und durch ein Verdrehen der Abstützrohre fest verspannt werden.

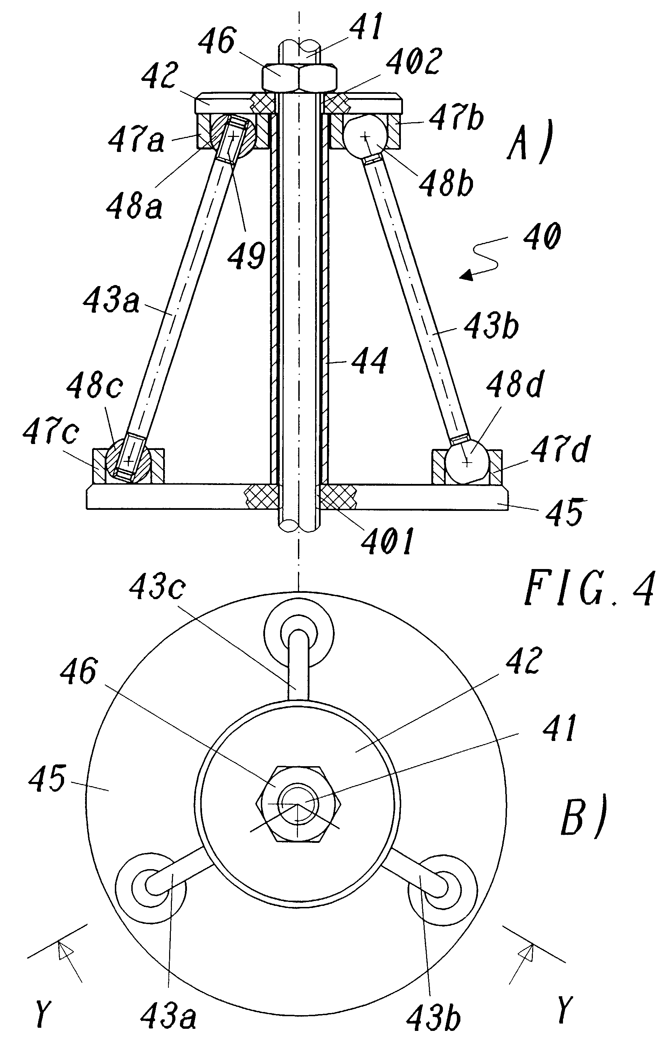

Ein anderes bevorzugtes Ausführungsbeispiel für eine lösbare Befestigung der Abstützelemente ist in Fig. 4 dargestellt, wobei Fig. 4B die Draufsicht von oben zeigt, und Fig. 4A eine Seitenansicht in der Ebene Y-Y gemäss Fig. 4B. Der Wandhalter 40 umfasst den Haltebolzen 41 (eine Gewindestange), die Grundplatte 45, die Stützplatte 42, das Abdeckrohr 44 und als Abstützelemente die Abstützstangen 43a-c. Die lös- und schwenkbare Befestigung wird durch Kugelgelenke erreicht, die jeweils an den Enden der Abstützstangen 43a-c angeordnet sind. Jedes Kugelgelenk umfasst eine Kugel 48a-d und eine entsprechende Kugellagerung 47a-d. Jede Kugellagerung besteht im wesentlichen aus einem Hohlzylinder, dessen Innendurchmesser etwas grösser ist als der Durchmesser der Kugeln 48a-d. Der Innendurchmesser verringert sich zum freien Ende des Zylinders hin, so dass eine Lagerschale in Form eines Kugelkalottenabschnitts gebildet wird. Die Kugellagerungen 47a-d sind mit ihrem anderen Ende mit der Grundplatte 45 bzw. mit der Stützplatte 42 verschweisst. Die Schweissung kann aus ästhetischen Gründen verdeckt erfolgen. Die Verbindung zwischen den Abstützstangen 43a-c und den in den Kugellagerungen 47a-d gelagerten Kugeln 48a-d wir durch Verschraubung hergestellt. Die Abstützstangen tragen an ihren Enden jeweils ein Aussengewinde 49, welches am einen Ende als Rechts- und am anderen Ende als Linksgewinde ausgebildet ist. Die Kugeln 48a-d sind mit entsprechenden Gewindebohrungen versehen. Auch bei diesem Beispiel ist in der Grundplatte 45 wieder eine zentrale Gewindebohrung 401 zum Einschrauben des Haltebolzens 41 vorgesehen. Die Konterung des Haltebolzens an der Stützplatte 42 kann wieder mittels einer Mutter 46 vorgenommen werden. Schliesslich ist in der Stützplatte die Durchgangsbohrung 402 zu erkennen, durch welche der Haltebolzen 41 gesteckt werden kann.

Um eine hohe mechanische Stabilität und Belastbarkeit bei gleichzeitiger Witterungsbeständigkeit zu erreichen, sind die Wandhalter nach der Erfindung vorzugsweise aus einem rostfreien Stahl, beispielsweise mit der Werkstoff-Nr. 1.4301 oder ähnlich. Die Abstände zwischen der Unterseite der Grundplatte 15, 25, 35, 45 und der Oberseite der Stützplatte 12, 22, 42 bzw. des Stützrohres 32 können in einem grossen Bereich gewählt werden und liegen zweckmässigerweise zwischen 70 und 200 mm, vorzugsweise bei etwa 100 bis 150 mm. Die Grundplatte hat z.B. einen Durchmesser von 100 mm bei einer Dicke von 5 oder 6 mm. Die Stützplatte kann einen Durchmesser von 40 oder 50 mm bei einer Dicke von 5 mm haben. Die Abstützstangen haben einen Durchmesser von z.B. 5 mm. Als Haltebolzen haben sich Gewindestangen M8 oder M10 bewährt.

Insgesamt ergibt sich mit der Erfindung ein Befestigungselement für parallel zu einer Wand verspannte Seile, das im Aussehen ästhetisch ist, leicht herzustellen und zu montieren ist, sich flexibel einsetzen und verändern lässt, und mit hoher Sicherheit starke Seilzugkräfte aufnehmen und in die Wand einleiten kann.

### BEZEICHNUNGSLISTE

- 10,20,30,40: Wandhalter
- 11,21,31,41: Haltebolzen
- 12,22,42: Stützplatte
- 13a-c: Abstützelement
- 14,24,34,44: Abdeckrohr
- 15,25,35,45: Grundplatte
- 16,26,36,46: Mutter
- 17: Augterminal
- 18: Drahtseil
- 23a,b: Abstützstange
- 27: Wand
- 28: Zwischenstück (thermisch isolierend)
- 29: Gewindestange
- 32: Stützrohr
- 33a,b: Abstützrohr
- 37: Verlängerungsrohr
- 38a,b: Oesenlasche (oben)
- 39a-d: Gabelkopf
- 43a-c: Abstützstange
- 47a-d: Kugellagerung
- 48a-d: Kugel
- 49: Aussengewinde
- 201,401: Gewindebohrung
- 202: Bohrung
- 301, 301a-d: Gewindestück
- 302: Loch
- 303,303a,b: Oesenlasche (unten)
- 304: Verbindungsbolzen
- 305a,b: Schenkel
- 402: Durchgangsbohrung

## Patentansprüche

1. Wandhalter (10, 20, 30, 40) zur endseitigen Befestigung eines im wesentlichen parallel zu einer Wand (27) in einem Abstand verlaufenden Seiles, insbesondere Drahtseiles (18), welcher Wandhalter einen mit einem Ende in der Wand (27) verankerbaren und im verankerten Zustand aus der Wand (27) senkrecht herausragenden Haltebolzen (11, 21, 31, 41) sowie Abstützmittel umfassen, welche den Haltebolzen (11, 21, 31, 41) seitlich gegen die Wand (27) abstützen, dadurch gekennzeichnet, dass die Abstützmittel eine an der Wand (27) anliegende, mit dem Haltebolzen (11, 21, 31, 41) verbundene und sich vom Haltebolzen (11, 21, 31, 41) aus seitlich in verschiedene Richtungen erstreckende Grundplatte (15, 25, 35, 45) und eine Mehrzahl von länglichen, zwei gegenüberliegende Enden aufweisenden Abstützelementen (13a-c; 23a,b; 33a,b; 43a,b) umfassen, dass die Abstützelemente (13a-c; 23a,b; 33a,b; 43a,b) jeweils mit dem Haltebolzen (11, 21, 31, 41) einen spitzen Winkel einschliessen, dass die Abstützelemente (13a-c; 23a,b; 33a,b; 43a,b) jeweils mit dem wandseitigen Ende an der Grundplatte (15, 25, 35, 45) befestigt sind und mit dem anderen Ende den Haltebolzen (11, 21, 31, 41) an einem von der Wand (27) beabstandeten Punkt abstützen, und dass die Abstützelemente (13a-c; 23a,b; 33a,b; 43a,b) über den Umfang des Haltebolzens (11, 21, 31, 41) verteilt angeordnet sind.

2. Wandhalter nach Anspruch 1, dadurch gekennzeichnet, dass die Grundplatte (15, 25, 35, 45) eine kreisförmige, ebene Platte ist und den Haltebolzen konzentrisch umgibt.

3. Wandhalter nach Anspruch 2, dadurch gekennzeichnet, dass mehr als zwei Abstützelemente (13a-c; 23a,b; 33a,b; 43a,b) vorgesehen sind, und dass die Abstützelemente (13a-c; 23a,b; 33a,b; 43a,b) über den Umfang des Haltebolzens (11, 21, 31, 41) gleichmässig verteilt angeordnet sind.

4. Wandhalter nach Anspruch 3, dadurch gekennzeichnet, dass drei Abstützelemente (13a-c; 23a,b; 33a,b; 43a,b) vorgesehen sind, deren Projektion auf die Grundplatte (15, 25, 35, 45) jeweils einen Winkel von etwa 120° miteinander einschliesst.

5. Wandhalter nach einem der Ansprüche 1 bis 4, dadurch gekennzeichnet, dass der Haltebolzen (11, 21, 31, 41) an beiden Enden mit einem Gewinde versehen ist, wobei das wandseitige Gewinde zum Verankern des Haltebolzens (11, 21, 31, 41) in der Wand (27) und das andere Gewinde zum Befestigen des Seiles vorgesehen ist.

6. Wandhalter nach Anspruch 5, dadurch gekennzeichnet, dass der Haltebolzen (11, 21, 31, 41) als durchgehende Gewindestange ausgebildet ist.

7. Wandhalter nach einem der Ansprüche 5 und 6, dadurch gekennzeichnet, dass die Grundplatte (15, 25, 35, 45) eine zentrale Gewindebohrung (201) aufweist, in welche der Haltebolzen (11, 21, 31, 41) einschraubbar ist.

8. Wandhalter nach einem der Ansprüche 1 bis 7, dadurch gekennzeichnet, dass zum Abstützen des Haltebolzens (11, 21, 41) durch die Abstützelemente (13a-c; 23a,b; 43a,b) eine Stützplatte (12, 22, 42) vorgesehen ist, dass die Stützplatte (12, 22, 42) parallel zur Grundplatte (15, 25, 45) angeordnet ist, dass die Stützplatte (12, 22, 42) eine zentrale Durchgangsbohrung (402) aufweist, durch welche der Haltebolzen (11, 21, 41) hindurchsteckbar ist, und dass die Abstützelemente (13a-c; 23a,b; 43a,b) mit ihren anderen Ende an der Stützplatte (12, 22, 42) befestigt sind.

9. Wandhalter nach einem der Ansprüche 1 bis 7., dadurch gekennzeichnet, dass zum Abstützen des Haltebolzens (31) ein Stützrohr (32) vorgesehen ist, welches den Haltebolzen (31) konzentrisch umgibt, und dass die Abstützelemente (33a,b) mit ihrem anderen Ende an dem Stützrohr (32) befestigt sind.

10. Wandhalter nach einem der Ansprüche 8 und 9, dadurch gekennzeichnet, dass die Befestigung der Abstützelemente (33a,b; 43a-c) an der Grundplatte (35, 45) und/oder an der Stützplatte (42) bzw. an dem Stützrohr (32) lösbar ausgebildet ist.

11. Wandhalter nach Anspruch 10, dadurch gekennzeichnet, dass die lösbare Befestigung jeweils ein aus einer Oesenlasche (38a,b; 303a,b) und einem zugehörigen Gabelkopf (39a-d) gebildetes Paar umfasst, welches untereinander durch einen Verbindungsbolzen (304) verbunden ist.

12. Wandhalter nach Anspruch 10, dadurch gekennzeichnet, dass die lösbare Befestigung jeweils ein aus einer Kugel (48a-d) und einer zugehörigen Kugellagerung (47a-d) gebildetes Paar umfasst.

13. Wandhalter nach einem der Ansprüche 10 bis 12, dadurch gekennzeichnet, dass die Abstützelemente (33a,b; 43a-c) in ihrer Länge verstellbar ausgebildet sind.

14. Wandhalter nach Anspruch 13, dadurch gekennzeichnet, dass die Abstützelemente (33a,b; 43a-c) an ihren Enden jeweils ein Rechts- und ein Linksgewinde (49,; 301a-d) aufweisen, welche Teil der lösbaren Befestigung sind.

15. Wandhalter nach einem der Ansprüche 8 und 9, dadurch gekennzeichnet, dass die Befestigung der Abstützelemente (23a,b) an der Grundplatte (25) und/oder an der Stützplatte (22) bzw. an dem Stützrohr durch eine stoffschlüssige Verbindung, insbesondere durch eine Schweissverbindung, bewirkt wird.

16. Wandhalter nach einem der Ansprüche 1 bis 15, dadurch gekennzeichnet, dass der Haltebolzen (11, 21, 31, 41) zwischen der Grundplatte (15, 25, 35, 45) und den Abstützpunkten von einem Abdeckrohr (14, 24, 34, 44) konzentrisch umgeben ist.

17. Wandhalter nach einem der Ansprüche 1 bis 16, dadurch gekennzeichnet, dass die Abstützelemente (23a,b; 33a,b; 43a-c) als Abstützrohre (33a,b) oder Abstützstangen (23a,b; 43a-c) ausgebildet sind.

18. Wandhalter nach einem der Ansprüche 1 bis 17, dadurch gekennzeichnet, dass die einzelnen Elemente des Wandhalters aus einem rostfreien Stahl sind.

19. Anwendung eines Wandhalters nach einem der Ansprüche 1 bis 17, dadurch gekennzeichnet, dass der Haltebolzen (21) über ein thermisch isolierendes Zwischenstück (28) in der Wand (27) verankert wird.

20. Anwendung eines Wandhalters nach einem der Ansprüche 1 bis 17 bei einer Begrünungshilfe für die Begrünung von Bauwerkswänden bzw. Fassaden.

## Claims

1. A wall mount (10, 20, 30, 40) for attaching one end of a cable, especially a wire cable (18) running essentially parallel to a wall (27) at a distance, said wall mount comprising a locking bolt (11, 21, 31, 41), which can be anchored in the wall (27) at one end and, in the anchored state, projects at a right angle out of the wall (27), and supporting means which support the locking bolt (11, 21, 31, 41) laterally with respect to the wall (27), characterized in that said supporting means comprise a base plate (15, 25, 35, 45), which is in contact with the wall (27) and extends laterally in different directions away from the locking bolt (11, 21, 31, 41), plus a plurality of elongated supporting elements (13a-c; 23a,b; 33a,b; 43a,b) having two opposing ends; said supporting elements (13a-c; 23a,b; 33a,b; 43a,b) each form an acute angle with the locking bolt (11, 21, 31, 41); said supporting elements (13a-c; 23a,b; 33a,b; 43a,b) are each attached to the base plate (15, 25, 35, 45) at the end facing the wall, with the other end supporting the locking bolt (11, 21, 31, 41) at a point a distance away from the wall (27); and said supporting elements (13a-c; 23a,b; 33a,b; 43a,b) are arranged so they are distributed around the circumference of the locking bolt (11, 21, 31, 41).

2. A wall mount according to Claim 1, characterized in that the base plate (15, 25, 35, 45) is a flat, circular plate surrounding the locking bolt concentrically.

3. A wall mount according to Claim 2, characterized in that more than two supporting elements (13a-c; 23a,b; 33a,b; 43a,b) are provided, and said supporting elements (13a-c; 23a,b; 33a,b; 43a,b) are arranged so they are distributed uniformly around the circumference of the locking bolt (11, 21, 31, 41).

4. A wall mount according to Claim 3, characterized in that three supporting elements (13a-c; 23a,b; 33a,b; 43a,b) are provided, with their projections onto the base plate (15, 25, 35, 45) forming angles of approximately 120° to one another.

5. A wall mount according to one of Claims 1 through 4, characterized in that the locking bolt (11, 21, 31, 41) has a thread on each end, with the thread on the wall side being provided for anchoring the locking bolt (11, 21, 31, 41) in the wall and the other thread being provided for attaching the cable.

6. A wall mount according to Claim 5, characterized in that more than the locking bolt (11, 21, 31, 41) is designed as a continuous threaded rod.

7. A wall mount according to one of Claims 5 and 6, characterized in that the base plate (15, 25, 35, 45) has a central threaded bore (201) into which the locking bolt (11, 21, 31, 41) can be screwed.

8. A wall mount according to one of Claims 1 through 7, characterized in that a supporting plate (12, 22, 42) is provided for the support of the locking bolt (11, 21, 41) by the supporting elements (13a-c; 23a,b; 43a,b); the supporting plate (12, 22, 42) is arranged parallel to the base plate (15, 25, 45); the supporting plate (12, 22, 42) has a central through-hole (402) through which the locking bolt (11, 21, 41) can be inserted; and the supporting elements (13a-c; 23a,b; 43a,b) can be attached to the supporting plate (12, 22, 42) at their other end.

9. A wall mount according to one of Claims 1 through 7, characterized in that a supporting tube (32) is provided for the support of the locking bolt (31), surrounding the locking bolt (31) concentrically, and the supporting elements (33a,b) are attached to the supporting tube (32) at their other end.

10. A wall mount according to one of Claims 8 and 9, characterized in that the attachment of the supporting elements (33a,b; 43a-c) to the base plate (35, 45) and/or to the supporting plate (42) or to the supporting tube (32) is designed to be detachable.

11. A wall mount according to Claim 10, characterized in that the detachable attachment comprises a pair consisting of an eyelet strap (38a,b; 303a,b) and a respective fork head (39a-d) that are connected to one another by a connecting pin (304).

12. A wall mount according to Claim 10, characterized in that the detachable attachment comprises a pair formed by a ball (48a-d) and a respective ball bearing (47a-d).

13. A wall mount according to one of Claims 10 through 12, characterized in that the supporting elements (33a,b; 43a-c) are designed to be adjustable in length.

14. A wall mount according to Claim 13, characterized in that the supporting elements (33a,b; 43a-c) each have a right-handed thread and a left-handed thread (49; 301a-d) on their ends as part of the detachable fastening.

15. A wall mount according to one of Claims 8 and 9, characterized in that the fastening of the supporting elements (23a,b) on the base plate (25) and/or on the supporting plate (22) or the supporting tube is accomplished by a materially engaged joint, in particular by a welded joint.

16. A wall mount according to one of Claims 1 through 15, characterized in that the locking bolt (11, 21, 31, 41) is concentrically surrounded by a cover tube (14, 24, 34, 44) between the base plate (15, 25, 35, 45) and the supporting points.

17. A wall mount according to one of Claims 1 through 16, characterized in that the supporting elements (23a,b; 33a,b; 43a-c) are designed as supporting tubes (33a,b) or supporting rods (23a,b; 43a-c).

18. A wall mount according to one of Claims 1 through 17, characterized in that the individual elements of the wall mount are made of a stainless steel.

19. A use of a wall mount according to one of Claims 1 through 17, characterized in that the locking bold (21) is anchored in the wall (27) by a thermally insulating spacer (28).

20. A use of a wall mount according to one of Claims 1 through 17 with an aid for growing greenery on the walls and facades of edifices.

## Revendications

1. Attache murale (10, 20, 30, 40) servant à fixer, côté extrémité, un câble évoluant de manière sensiblement parallèle à un mur (27) et à distance de celui-ci, en particulier câble métallique (18), attache murale comprenant un boulon de retenue (11, 21, 31, 41) ancrable dans le mur (27) par une extrémité et faisant saillie perpendiculairement au mur (27) à l'état ancré, ainsi que des moyens de soutien qui soutiennent le boulon de retenue (11, 21, 31, 41) latéralement contre le mur (27), caractérisée en ce que les moyens de soutien comprennent une plaque de base (15, 25, 35, 45) en applique sur le mur (27), raccordée au boulon de retenue (11, 21, 31, 41) et s'étendant latéralement dans plusieurs directions, partant du boulon de retenue (11, 21, 31, 41), ainsi qu'une pluralité d'éléments de soutien (13a-c; 23a,b; 33a,b; 43a,b) allongés et présentant deux extrémités opposées, en ce que les éléments de soutien (13a-c; 23a,b; 33a,b; 43a,b) incluent tous un angle aigu avec le boulon de retenue (11, 21, 31, 41), en ce que les éléments de soutien (13a-c; 23a,b; 33a,b; 43a,b) sont tous fixés à la plaque de base (15, 25, 35, 45) par leur extrémité située côté mur, et soutiennent le boulon de retenue (11, 21, 31, 41) en appui en un point espacé du mur (27) avec leur autre extrémité, et en ce que les éléments de soutien (13a-c; 23a,b; 33a,b; 43a,b) sont répartis sur la périphérie du boulon de retenue (11, 21, 31, 41).

2. Attache murale suivant la revendication 1, caractérisée en ce que la plaque de base (15, 25, 35, 45) est une plaque circulaire et plane, et entoure le boulon de retenue concentriquement.

3. Attache murale suivant la revendication 2, caractérisée en ce qu'il est prévu plus de deux éléments de soutien (13a-c; 23a,b; 33a,b; 43a,b), et en ce que les éléments de soutien (13a-c; 23a,b; 33a,b; 43a,b) sont répartis régulièrement sur la périphérie du boulon de retenue (11, 21, 31, 41).

4. Attache murale suivant la revendication 3, caractérisée en ce qu'il est prévu trois éléments de soutien (13a-c; 23a,b; 33a,b; 43a,b) dont la projection sur la plaque de base (15, 25, 35, 45) inclut chaque fois un angle de 120°, environ, entre eux.

5. Attache murale suivant l'une quelconque des revendications 1 à 4, caractérisée en ce que le boulon de retenue (11, 21, 31, 41) est pourvu d'un filet à ses deux extrémités, le filet situé du côté du mur étant prévu pour ancrer le boulon de retenue (11, 21, 31, 41) dans le mur (27), et l'autre filet, pour attacher le câble.

6. Attache murale suivant la revendication 5, caractérisée en ce que le boulon de retenue (11, 21, 31, 41) est réalisé sous forme de tige filetée de bout en bout.

7. Attache murale suivant l'une quelconque des revendications 5 et 6, caractérisée en ce que la plaque de base (15, 25, 35, 45) présente un perçage central fileté (201) dans lequel le boulon de retenue (11, 21, 31, 41) peut être vissé.

8. Attache murale suivant l'une quelconque des revendications 1 à 7, caractérisée en ce que pour que le boulon de retenue (11, 21, 41) soit soutenu par les éléments de soutien (13a-c; 23a,b; 43a,b), il est prévu une plaque de soutien (12, 22, 42), en ce que la plaque de soutien (12, 22, 42) est agencée parallèlement à la plaque de base (15, 25, 45), en ce que la plaque de soutien (12, 22, 42) présente un perçage de passage central (402) par lequel le boulon de retenue (11, 21, 41) peut être enfoncé, et en ce que les éléments de soutien (13a-c; 23a,b; 43a,b) sont fixés, par leur autre extrémité, à la plaque de soutien (12, 22, 42).

9. Attache murale suivant l'une quelconque des revendications 1 à 7, caractérisée en ce que pour soutenir le boulon de retenue (31), il est prévu un tube de soutien (32) entourant le boulon de retenue (31), concentriquement, et en ce que les éléments de soutien (33a,b) sont fixés au tube de soutien (32) par leur autre extrémité.

10. Attache murale suivant l'une quelconque des revendications 8 et 9, caractérisée en ce que la fixation des éléments de soutien (33a,b; 43a-c) à la plaque de base (35, 45) et/ou à la plaque de soutien (42) ou au tube de soutien (32) peut être détachée.

11. Attache murale suivant la revendication 10, caractérisée en ce que la fixation détachable comprend, chaque fois, une paire constituée d'une patte à oeillet (38a,b; 303a,b) et d'une chape associée (39a-d), paire que solidarise un axe de liaison (304).

12. Attache murale suivant la revendication 10, caractérisée en ce que la fixation détachable comprend, chaque fois, une paire constituée d'une bille (48a-d) et d'un roulement à bille associé (47a-d).

13. Attache murale suivant l'une quelconque des revendications 10 à 12, caractérisée en ce que les éléments de soutien (33a,b; 43a-c) sont configurés pour pouvoir être ajustés en longueur.

14. Attache murale suivant la revendication 13, caractérisée en ce que les éléments de soutien (33a,b; 43a-c) présentent, respectivement, à leurs extrémités, un filet à droite et un filet à gauche (49; 301a-d) qui constituent un élément de la fixation détachable.

15. Attache murale suivant l'une quelconque des revendications 8 et 9, caractérisée en ce que la fixation des éléments de soutien (23a,b) à la plaque de base (25) et/ou à la plaque de soutien (22) voire au tube de soutien est réalisée par une liaison par matière, en particulier par une soudure.

16. Attache murale suivant l'une quelconque des revendications 1 à 15, caractérisée en ce que le boulon de retenue (11, 21, 31, 41) est entouré concentriquement par un tube de recouvrement (14, 24, 34, 44) entre la plaque de base (15, 25, 35, 45) et les points d'appui.

17. Attache murale suivant l'une quelconque des revendications 1 à 16, caractérisée en ce que les éléments de soutien (23a,b; 33a,b; 43a-c) sont réalisés sous forme de tube de soutien (33a,b) ou de tiges de soutien (23a,b; 43a-c).

18. Attache murale suivant l'une quelconque des revendications 1 à 17, caractérisée en ce que les éléments individuels de l'attache murale sont fabriqués dans un acier inoxydable.

19. Utilisation d'une attache murale suivant l'une quelconque des revendications 1 à 17, caractérisée en ce que le boulon de retenue (21) est ancré dans le mur (27) par l'intermédiaire d'une fourrure (28) thermo-isolante.

20. Utilisation d'une attache murale suivant l'une quelconque des revendications 1 à 17, comme aide pour l'engazonnement de murs ou de façades d'ouvrages de construction.
